# EUROPEAN PATENT SPECIFICATION

(11) **EP 3 533 621 B1**
(45) Date of publication and mention of the grant of the patent: **13.05.2020**
(21) Application number: 19159024.9
(22) Date of filing: 25.02.2019
(51) Int. Cl.: B60B 27/04, B62M 21/00

(54) **WHEEL DAMPER STRUCTURE**
RADDÄMPFERSTRUKTUR
STRUCTURE D'AMORTISSEUR DE ROUE

(30) Priority: 28.02.2018 JP 2018035857
(43) Date of publication of application: 04.09.2019
(73) Proprietor: Honda Motor Co., Ltd., Tokyo 107-8556 (JP)
(72) Inventor: ASHIDA, Naohiro, Saitama, 351-0024 (JP); CHENG, Yuliang, Saitama, 351-0024 (JP); SATO, Shin, Saitama, 351-0024 (JP)
(74) Representative: Weickmann & Weickmann PartmbB

(56) References cited:
- EP-A1- 1 746 308
- EP-A1- 2 626 217
- JP-A- 2007 170 554
- JP-U- S6 342 951
- US-A- 4 585 431

## Description

### Technical Field

The present invention relates to a wheel damper structure, particularly to a wheel damper structure for reducing a shock at the time when an engine driving force and a back torque act on a driving wheel.

### Background Art

In a vehicle in which a rotational power of an engine is transmitted to a driven sprocket of a driving wheel through a drive chain, there has been known a wheel damper structure in which a damper member formed of a rubber or the like is interposed between a wheel of the driving wheel and a sprocket holder supporting the driven sprocket.

Patent Document 1 discloses a wheel damper structure in which damper members differing in shape are applied respectively to a normal rotating direction of a driving wheel and to a reverse rotating direction of the driving wheel, whereby damper characteristic at the time of acceleration and that at the time when a back torque acts are made to be different.

### Prior Art Document

### Patent Document

Patent Document 1: Japanese Patent Laid-open No. 2013-159329

### Summary of the Invention

### Problem to be Solved by the Invention

In the wheel damper structure disclosed in Patent Document 1, two kinds of damper members differing in shape are used, and, therefore, there is a problem that a workability at the time of mounting the damper members is lowered and that a wheel hub accommodating the damper members is liable to be enlarged in size.

It is an object of the present invention to provide a wheel damper structure by which damper characteristic at the time of acceleration and that at the time when a back torque acts can be made to be different with a small-sized light-weight configuration.

### Solution to Problems

The present invention has a first feature in a wheel damper structure to be applied to a saddled vehicle (1) which includes a wheel hub (60) formed to surround an axle (24) of a rear wheel (WR), a damper chamber (63) provided in the wheel hub (60), a damper member (70) accommodated in the damper chamber (63), and a sprocket holder (55) supported by the wheel hub (60) through the damper member (70), wherein the damper member (70) has a cylindrical shape being circular in side view of a vehicle body, the damper member (70) is formed with a hole (73) in which a projection (56) extending in an axial direction from the sprocket holder (55) is inserted, and the hole (73) is provided with an offset in a predetermined direction from a damper center (C2) of the damper member (70).

The present invention has a second feature in that the hole (73) is provided with an offset to a side of a normal rotating direction of the rear wheel (WR).

The present invention has a third feature in that the hole (73) is provided on a circle (L) of which a radius (R) is a straight line interconnecting an axle center (C1) of the axle (24) and the damper center (C2) of the damper member (70).

The present invention has a fourth feature in that the damper member (70) is formed in such a manner that a material constituting a normal rotating direction side of the hole (73) is higher in hardness than a material constituting a reverse rotating direction side of the hole (73).

The present invention has a fifth feature in that the damper member (70) is formed by integrally molding rubbers differing in hardness.

The present invention has a sixth feature in that the hole (73) is a through-hole circular in section and parallel to the axle (24).

### Effects of the Invention

According to the first feature of the present invention, in a wheel damper structure to be applied to a saddled vehicle (1) which includes a wheel hub (60) formed to surround an axle (24) of a rear wheel (WR), a damper chamber (63) provided in the wheel hub (60), a damper member (70) accommodated in the damper chamber (63), and a sprocket holder (55) supported by the wheel hub (60) through the damper member (70), wherein the damper member (70) has a cylindrical shape being circular in side view of a vehicle body, the damper member (70) is formed with a hole (73) in which a projection (56) extending in an axial direction from the sprocket holder (55) is inserted, and the hole (73) is provided with an offset in a predetermined direction from a damper center (C2) of the damper member (70). Therefore, damper characteristic in a normal rotating direction of the rear wheel and that in a reverse rotating direction of the rear wheel can be made to differ, by a single damper member. As a result, a mounting operation for the damper member becomes easier, and the damper member and the wheel hub can be reduced in size and weight, as compared to a configuration in which two kinds of damper members differing in shape and/or material are used.

According to the second feature of the present invention, the hole (73) is provided with an offset to a side of a normal rotating direction of the rear wheel (WR). Therefore, the damper member can be configured in such a manner that the material thickness from an outer peripheral surface of the damper member to an inner peripheral surface of the hole on the reverse rotating direction side is larger than that on the normal rotating direction side. Consequently, the feeling of directness at the time of acceleration can be enhanced, and a shock absorbing effect at the time when a back torque acts can be enhanced.

According to the third feature of the present invention, the hole (73) is provided on a circle (L) of which a radius (R) is a straight line interconnecting an axle center (C1) of the axle (24) and the damper center (C2) of the damper member (70). Therefore, the projection extending from the sprocket holder can be disposed on a concentric circle, and uniformization of a damper effect of each damper member can be realized.

According to the fourth feature of the present invention, the damper member (70) is formed in such a manner that a material constituting a normal rotating direction side of the hole (73) is higher in hardness than a material constituting a reverse rotating direction side of the hole (73). Therefore, not only the material thickness of the damper member but also the hardness of the material can be made different, and the feeling on the normal rotating direction side and that on the reverse rotating direction side can be made further different by use of a single damper member.

According to the fifth feature of the present invention, the damper member (70) is formed by integrally molding rubbers differing in hardness. Therefore, durability of the damper member can be enhanced.

According to the sixth feature of the present invention, the hole (73) is a through-hole circular in section and parallel to the axle (24). Therefore, production of the damper member is facilitated, and, by making the damper member in face-back symmetry, a mounting operation for the damper member is facilitated. In addition, by fitting a cylindrical collar formed of a metal or the like in the hole, durability of the damper member can be enhanced.

### Brief Description of Drawings

FIG. 1 is a left side view of a motorcycle to which a wheel damper structure according to an embodiment of the present invention has been applied.
FIG. 2 is a right side view of the motorcycle.
FIG. 3 is a front view of the motorcycle.
FIG. 4 is a perspective view of a wheel constituting a rear wheel WR.
FIG. 5 is a perspective view of a sprocket holder.
FIG. 6 is a perspective view of a wheel hub provided in the wheel.
FIG. 7 is a front view of the wheel hub.
FIG. 8A is a front view of the damper member.
FIG. 8B is a sectional view taken along line b-b of FIG. 8A.
FIG. 9 is a perspective view of a mounting jig for the damper members.
FIG. 10 is a perspective view depicting a state in which the damper members are mounted by use of the mounting jig.

### Modes for Carrying Out the Invention

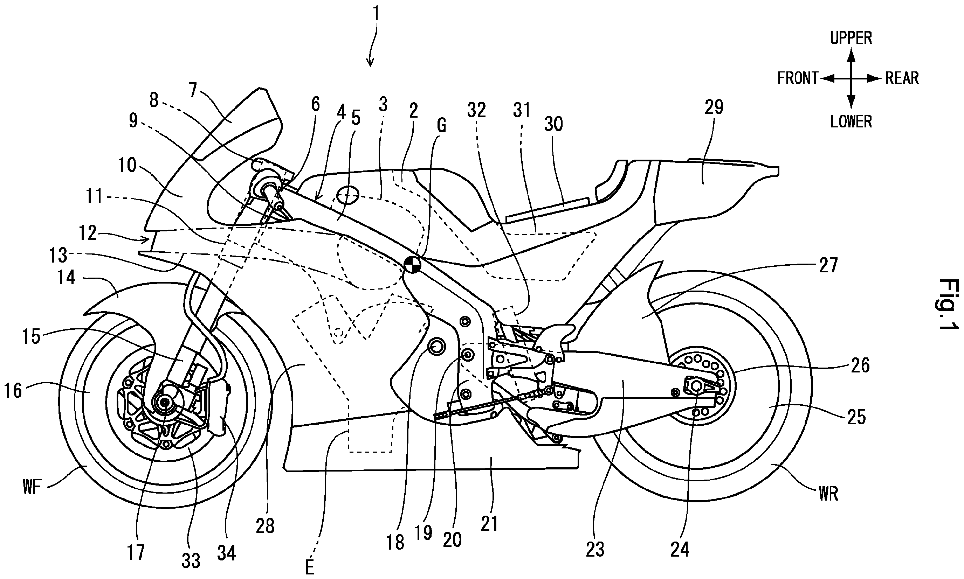

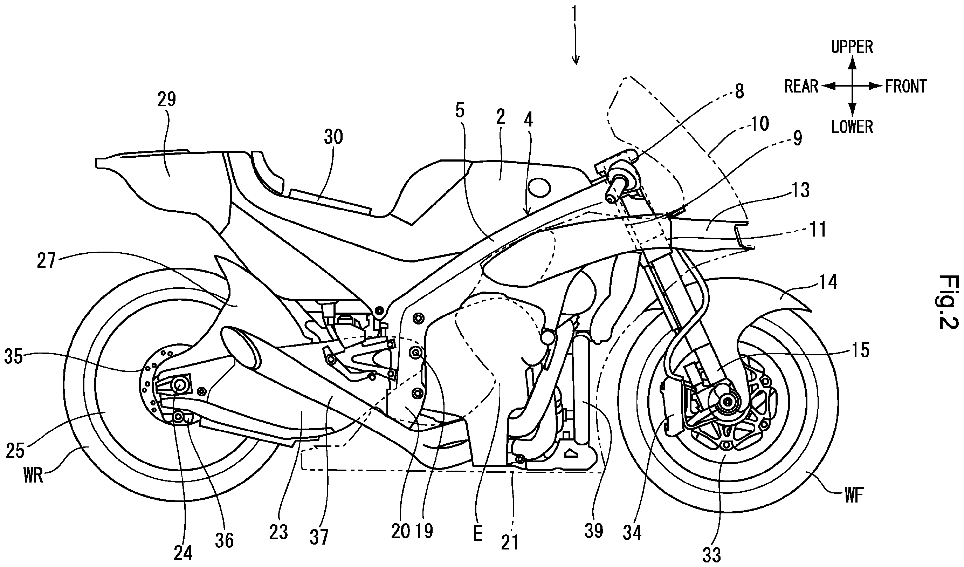

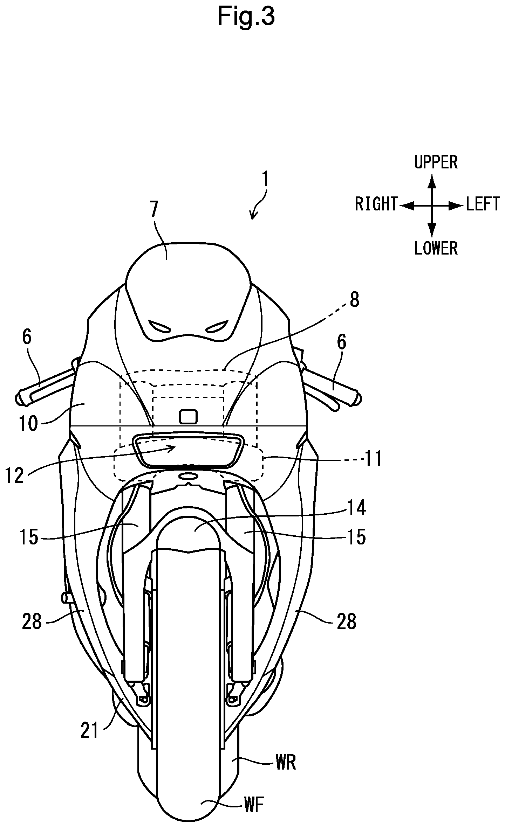

A preferred embodiment of the present invention will be described below, referring to the drawings. FIG. 1 is a left side view of a motorcycle 1 to which a wheel damper structure according to an embodiment of the present invention has been applied. In addition, FIG. 2 is a right side view of the same, and FIG. 3 is a front view of the same. A body frame 4 of the motorcycle 1 as a saddled vehicle has a pair of left and right main frames 5 extending from a head pipe 9 toward a vehicle body rear side. A steering system of a front wheel WF that is shaft-supported in an oscillatable manner by the head pipe 9 includes: a pair of left and right front forks 15 shaft-supporting the front wheel WF by an axle 17; a top bridge 8 and a bottom bridge 11 that clamp the front forks 15 on the upper and lower sides of the head pipe 9; and a steering stem (not depicted) rotatably supported by the head pipe 9 while interconnecting the top bridge 8 and the bottom bridge 11. A pair of left and right brake disks 33 are fixed to a wheel 16 of the front wheel WF, and they constitute a hydraulic brake system on the front wheel WF side together with a front brake caliper 34 fixed to the front forks 15. A steering handlebar 6 is fixed to upper portions of the front forks 15.

A pair of left and right pivot plates 20 which support a pivot 19 shaft-supporting a swing arm 23 in an oscillatable manner are connected to rear lower portions of the main frames 5. A four-cycle V-type four-cylinder engine E is fixed to lower portions of the main frames 5. A combustion gas of the engine E is guided through an exhaust pipe to a muffler 37 on the transverse directionally right side. A driving force of the engine E is transmitted to a rear wheel WR shaft-supported at a rear end of the swing arm 23 in a rotatable manner.

A front cowl 10 provided with a windscreen 7 is disposed on the front side of the head pipe 9. A pair of left and right side cowls 28 are connected to the lower side of the front cowl 10, and an under cowl 21 covering a lower portion of the engine E is connected to lower end portions of the side cowls 28. A front fender 14 covering an upper portion of the front wheel WF is fixed to the front forks 15. A tank cover 2 covering upper portions of a fuel tank 31 and an air cleaner box 3 is attached to upper portions of the main frames 5. A rear cowl 29 is disposed on the rear side of a seat 30 attached to the tank cover 2. A rear fender 27 covering an upper portion of the rear wheel WR is fixed to an upper portion of the swing arm 23.

The rear wheel WR is shaft-supported in a rotatable manner by an axle 24 at a rear end portion of the swing arm 23. The driving force outputted from an output shaft 18 of the engine E is transmitted through a drive chain (not depicted) to a driven sprocket 26 fixed to a transverse directionally left side of a wheel 25 of the rear wheel WR. A brake disk 35 is fixed to a transverse directionally right side of the wheel 25 of the rear wheel WR, and it constitutes a hydraulic brake system on the rear wheel WR side together with a rear brake caliper 36 disposed on a lower side of the swing arm 23. The swing arm 23 is suspended from the body frame 4 by a rear cushion 32 disposed on the rear side of the pivot 19.

A pair of left and right air ducts 13 for guiding outside air to a lower portion of the air cleaner box 3 is disposed on transverse directionally outer sides of the main frames 5. The air ducts 13 pass on the transverse directionally outer sides of the front forks 15 to join each other on the front side of the head pipe 9, and to be connected to an opening 12 provided in the transverse directional center of the front cowl 10. A radiator 39 is disposed on a vehicle body front side of the engine E. The center of gravity G of the motorcycle 1 according to the present embodiment is located at the transverse directional center in the vicinity of rear ends of the air ducts 13.

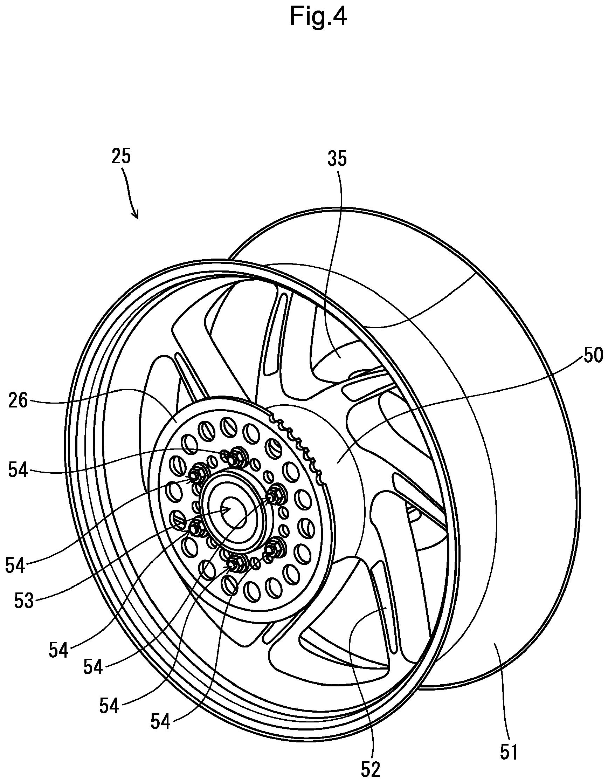

FIG. 4 is a perspective view of a wheel 25 constituting a rear wheel WR. The wheel 25 formed from a metal such as magnesium has a configuration in which a rim 51 for fixing a tire is supported by a plurality of spokes 52 provided in the periphery of a cylindrical trunk portion 50. A brake disk 35 sandwiched by a rear brake caliper 36 is disposed on the transverse directionally right side of the trunk portion 50, and a driven sprocket 26 supported by fastening members 54 such as bolts is disposed on the transverse directionally left side of the trunk portion 50. A through-hole 53 through which to pass an axle 24 is provided in the center of the wheel 25.

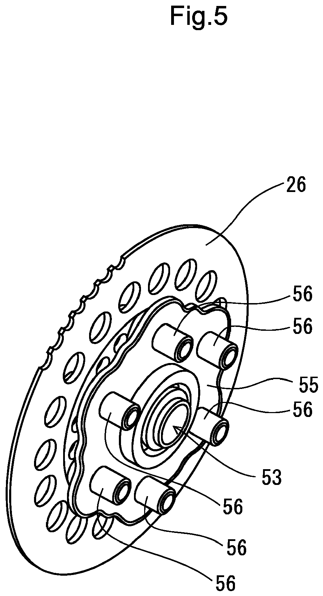

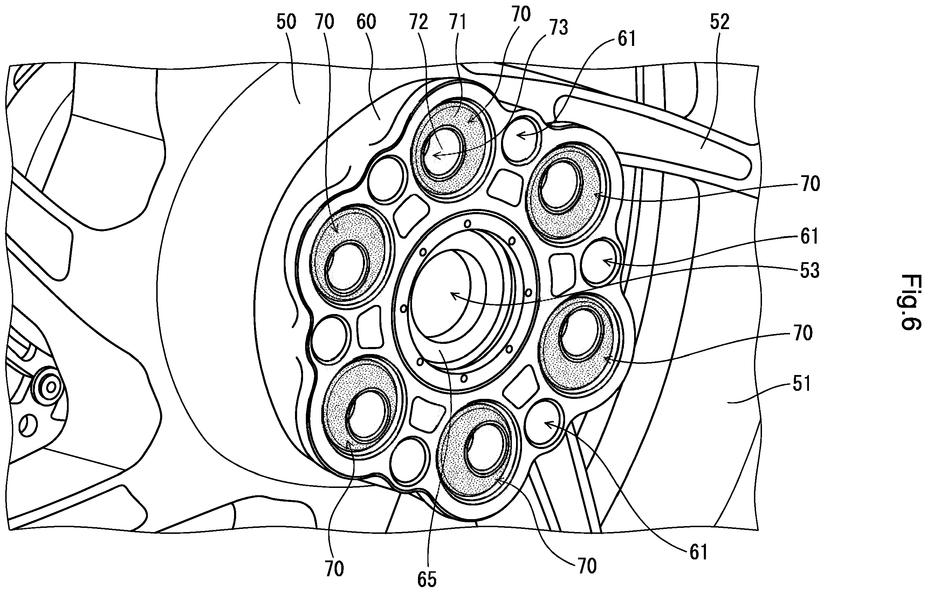

FIG. 5 is a perspective view of a sprocket holder 55. FIG. 6 is a perspective view of a wheel hub 60 provided in the wheel 25. The driven sprocket 26 formed from a metal such as aluminum and provided at an outer peripheral portion thereof with a plurality of teeth (only some of them are depicted) on which a drive chain 22 is wrapped is fixed to a transverse directionally outer surface of the sprocket holder 55 by screw engagement of the six fastening members 54 with cylindrical projections 56. The six cylindrical projections 56 are disposed at regular intervals on a circle concentric with the axle 24.

Six damper members 70 are accommodated in the wheel hub 60 provided in the trunk portion 50 of the wheel 25. The damper members 70 which are circular in side view of the vehicle body are disposed at regular intervals on a circle concentric with the axle 24. A metal-made cylindrical collar 72 is embedded in each of the damper members 70 formed from a rubber or the like. The sprocket holder 55 is supported by the wheel hub 60 by fitting the six cylindrical projections 56 extending to the transverse directionally inner side in holes 73 constituted of the cylindrical collars 72 of the six damper members 70.

The wheel hub 60 is fixed to the trunk portion 50 of the wheel 25 by fastening members such as bolts inserted in six recesses 61. A bearing 65 for supporting the axle 24 is attached to the center of the wheel hub 60.

The wheel damper structure according to the present embodiment is characterized in that the holes 73 of the damper members 70 are provided with an offset in the normal rotating direction of the rear wheel WR. According to the damper members 70, damper characteristic in the normal rotating direction of the rear wheel WR and that in the reverse rotating direction of the rear wheel WR can be made different.

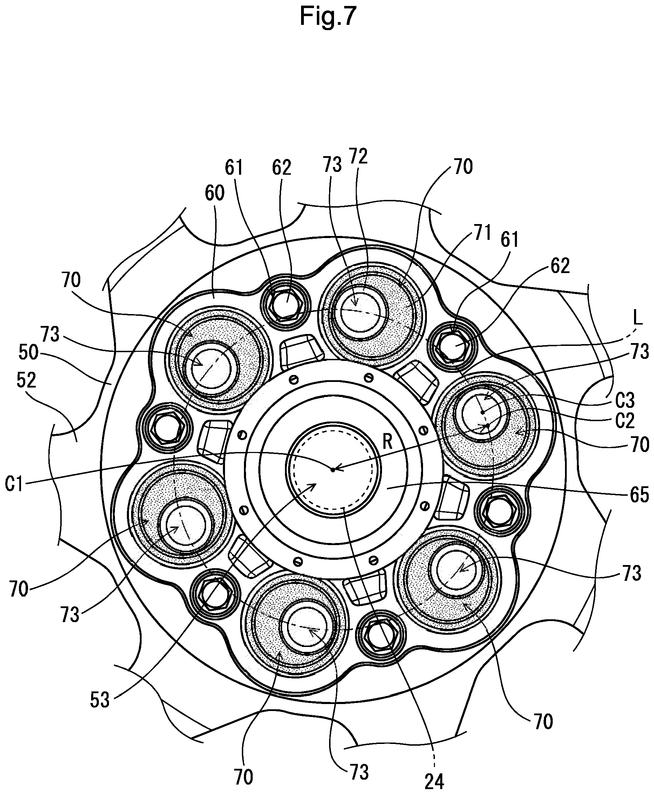

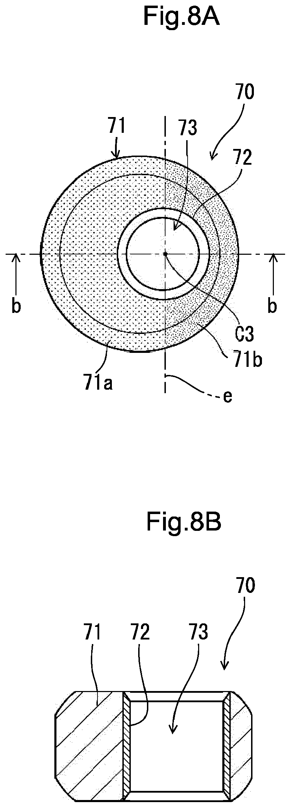

FIG. 7 is a front view of the wheel hub 60. FIG. 8A is a front view of the damper member 70. FIG. 8B is a sectional view of the damper member 70. The sectional view depicted in FIG. 8B is a sectional view taken along line b-b of FIG. 8A. The wheel hub 60 is fixed to the trunk portion 50 of the wheel 25 by fastening members 62 which are inserted in the recesses 61 disposed at regular intervals between the damper members 70.

The damper member 70 having a cylindrical shape being circular in side view of the vehicle body has a face-back symmetrical shape configured by a damper rubber 71 and the cylindrical collar 72. Corner portions on the outer peripheral side of the damper rubber 71 are chamfered for facilitating an operation of mounting on the wheel hub 60.

The holes 73, which are through-holes circular in section and parallel to the axle 24, are provided with an offset in the normal rotating direction of the rear wheel WR. Specifically, the hole 73 has its hole center C3 located on a circle L of which the radius R is a straight line interconnecting the axle center C1 of the axle 24 and the damper center C2 of the damper member 70, with an offset to the normal rotating direction side. By this, the material thickness from an outer peripheral surface of the damper member 70 to an inner peripheral surface of the hole 73 can be configured to be larger on the reverse rotating direction side than on the normal rotating direction side. As a result, the feeling of directness at the time of acceleration can be enhanced, and a shock absorbing effect at the time when a back torque acts can be enhanced. According to this configuration, an operation of mounting the damper members 70 is facilitated, and the damper members 70 and the wheel hub 60 can be reduced in size and weight, as compared to the configuration in which two kinds of damper members differing in shape and/or material are used. The damper members 70 are disposed on a concentric circle and at regular intervals, so that uniformization of the damper effects of the damper members is realized.

Referring to FIGS. 8A and 8B, the damper member 70 is formed in such a manner that a material 71b constituting the normal rotating direction side of the hole 73, with a boundary e set as a boundary, is higher in hardness than a material 71a constituting the reverse rotating direction side of the hole 73. Thus, by making different not only the material thickness but also the material hardness of the damper member 70, the feeling on the normal rotating direction side and that on the reverse rotating direction side can be made further different. In addition, the damper members 73 are insert-molded with the cylindrical collars 72, and the material 71a on the normal rotating direction side and the material 71b on the reverse rotating direction side are integrally molded, whereby durability thereof is also enhanced largely.

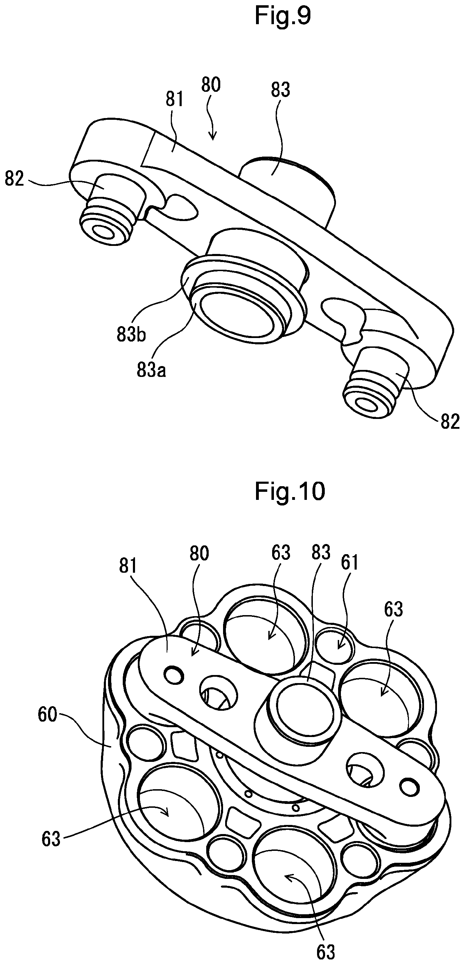

FIG. 9 is a perspective view of a mounting jig 80 for the damper members 70. FIG. 10 is a perspective view depicting a state in which the damper members 70 are mounted by use of the mounting jig 80. The wheel hub 60 is formed with six damper chambers 63 for accommodating the damper members 70. When the damper members 70 having the cylindrical outer shape are accommodated in the damper chambers 63 which are bottomed cylindrical recesses, the rotating directional positions of the damper members 70 should be set correctly. In this point, when the mounting jig 80 depicted in FIGS. 9 and 10 is used, the two damper members 70 opposed to each other on opposite sides of the through-hole 53 can be positioned simultaneously.

The mounting jig 80 includes a main body portion 81 formed with two cylindrical portions 82 to be inserted in the holes 73 of the damper members 70, and a collar member 83 penetrating the center of the main body portion 81. The collar member 83 is formed with a cylindrical portion 83a to be inserted in the bearing 65 (see FIG. 7), and a flange portion 83b to be put into contact with a side surface of the bearing 65. According to this mounting jig 80, by putting the collar member 83 in contact with the bearing 65 and further pressing in the main body portion 81 in a state in which the two damper members 70 are engaged with the cylindrical portions 82, the damper members 70 can be mounted while regulating the holes 73 of the damper members 70 at predetermined positions.

The shapes and structures of the wheel and the sprocket holder, the shape and structure of the wheel hub, the producing method for the damper members, the size and number of the damper members, the offset amount of the holes, the hardness of the rubber constituting the damper members, the position of the boundary between the rubbers differing in hardness, and the like are not limited to those in the present embodiment, and various modifications are possible. For example, the hole of the damper member may be formed as a polygonal through-hole or a bottomed recess. A configuration in which the wheel hub is formed integrally with the trunk portion, a configuration in which the cylindrical collar of the damper member is discarded, or a configuration in which a surface of the damper member is provided with a projection or recess for regulating the rotating directional position, may be adopted. The wheel damper structure according to the present invention is applicable not only to motorcycles but also to three-wheeled vehicles, four-wheeled vehicles and the like in which power is transmitted to a driving wheel or wheels by a drive chain, a drive belt, a drive shaft or the like.

In a saddled vehicle (1) which includes a damper chamber (63) provided in a wheel hub (60), a damper member (70) accommodated in the damper chamber (63), and a sprocket holder (55) supported by the wheel hub (60) through the damper member (70), the damper member (70) has a cylindrical shape being circular in side view of a vehicle body. The damper member (70) is formed with a hole (73) in which to insert a projection (56) extending in an axial direction from the sprocket holder (55). The hole (73) is provided with an offset from a damper center (C2) of the damper member (70) to the side of a normal rotating direction of a rear wheel (WR). The hole (73) is located on a circle (L) of which a radius (R) is a straight line interconnecting an axle center (C1) of an axle (24) and the damper center (C2) of the damper member (70).

### Explanation of sign

1...motorcycle (saddled vehicle), 22...drive chain, 25...wheel, 26...driven sprocket, 24...axle, 53...through-hole, 55...sprocket holder, 56...cylindrical projections, 60...wheel hub, 63...damper chamber, 65...bearing, 70...damper members, 71...damper rubber, 72...cylindrical collar, 73...holes, C1...axle center, C2...damper center, e...boundary, L...circle, R...radius, WR...rear wheel

## Claims

1. A wheel damper structure to be applied to a saddled vehicle (1) which includes a wheel hub (60) formed to surround an axle (24) of a rear wheel (WR), a damper chamber (63) provided in the wheel hub (60), a damper member (70) accommodated in the damper chamber (63), and a sprocket holder (55) supported by the wheel hub (60) through the damper member (70),
**characterized in that** the damper member (70) has a cylindrical shape being circular in side view of a vehicle body,
the damper member (70) is formed with a hole (73) to which a projection (56) extending in an axial direction from the sprocket holder (55) is inserted, and
the hole (73) is provided with an offset in a predetermined direction from a damper center (C2) of the damper member (70).

2. The wheel damper structure according to claim 1, wherein the hole (73) is provided with an offset to a side of a normal rotating direction of the rear wheel (WR).

3. The wheel damper structure according to claim 2, wherein the hole (73) is provided on a circle (L) of which a radius (R) is a straight line interconnecting an axle center (C1) of the axle (24) and the damper center (C2) of the damper member (70).

4. The wheel damper structure according to any one of claims 1 to 3, wherein the damper member (70) is formed in such a manner that a material constituting a normal rotating direction side of the hole (73) is higher in hardness than a material constituting a reverse rotating direction side of the hole (73).

5. The wheel damper structure according to claim 4, wherein the damper member (70) is formed by integrally molding rubbers differing in hardness.

6. The wheel damper structure according to any one of claims 1 to 4, wherein the hole (73) is a through-hole circular in section and parallel to the axle (24).

## Patentansprüche

1. Rad-Dämpferstruktur, welche auf ein Sattelfahrzeug (1) anzuwenden ist, welches eine Radnabe (60), welche gebildet ist, um eine Achse (24) eines hinteren Rads (WR) zu umgeben, eine Dämpferkammer (63), welche in der Radnabe (60) bereitgestellt ist, ein Dämpferelement (70), welches in der Dämpferkammer (63) aufgenommen ist, und einen Ritzelhalter (55) umfasst, welcher durch die Radnabe (60) durch das Dämpferelement (70) gehaltert ist,
**dadurch gekennzeichnet, dass** das Dämpferelement (70) eine zylindrische Form aufweist, welche in einer Seitenansicht des Fahrzeugkörpers kreisförmig ist,
das Dämpferelement (70) mit einem Loch (73) ausgebildet ist, in welches ein Vorsprung (56), welcher sich in einer axialen Richtung von dem Ritzelhalter (55) erstreckt, eingesetzt ist, und
das Loch (73) mit einem Versatz in einer vorbestimmten Richtung von einem Dämpferzentrum (C2) des Dämpferelements (70) bereitgestellt ist.

2. Rad-Dämpferstruktur nach Anspruch 1, wobei das Loch (73) mit einem Versatz zu einer Seite einer normalen Rotationsrichtung des hinteren Rads (WR) bereitgestellt ist.

3. Rad-Dämpferstruktur nach Anspruch 2, wobei das Loch (73) an einem Kreis (L) bereitgestellt ist, von welchem ein Radius (R) eine gerade Linie ist, welche ein Achszentrum (C1) der Achse (24) und das Dämpferzentrum (C2) des Dämpferelements (70) miteinander verbindet.

4. Rad-Dämpferstruktur nach einem der Ansprüche 1 bis 3, wobei das Dämpferelement (70) in einer derartigen Weise gebildet ist, dass ein Material, welches eine Seite einer normalen Rotationsrichtung des Lochs (73) bildet, in einer Härte höher ist als ein Material, welches eine Seite einer rückwärtigen Rotationsrichtung des Lochs (73) bildet.

5. Rad-Dämpferstruktur nach Anspruch 4, wobei das Dämpferelement (70) durch integrales Formen von Gummis gebildet ist, welche sich in einer Härte unterscheiden.

6. Rad-Dämpferstruktur nach einem der Ansprüche 1 bis 4, wobei das Loch (73) ein Durchgangsloch ist, welches in einem Querschnitt kreisförmig ist und parallel zu der Achse (24) ist.

## Revendications

1. Structure d'amortisseur de roue destinée à être appliquée à un véhicule à selle (1) qui comprend un moyeu de roue (60) formé pour entourer un axe (24) d'une roue arrière (WR), une chambre d'amortisseur (63) prévue dans le moyeu de roue (60), un élément amortisseur (70) logé dans la chambre d'amortisseur (63), et un support de pignon (55) supporté par le moyeu de roue (60) par l'intermédiaire de l'élément amortisseur (70), **caractérisé en ce que**
l'élément amortisseur (70) a une forme cylindrique étant circulaire en vue latérale d'un corps de véhicule,
l'élément amortisseur (70) est formé avec un trou (73) dans lequel une saillie (56) s'étendant dans une direction axiale à partir du support de pignon (55) est insérée, et le trou (73) est pourvu d'un décalage dans une direction prédéterminée à partir d'un centre amortisseur (C2) de l'élément amortisseur (70).

2. Structure d'amortisseur de roue selon la revendication 1, dans laquelle le trou (73) est pourvu d'un décalage vers un côté d'une direction de rotation normale de la roue arrière (WR).

3. Structure d'amortisseur de roue selon la revendication 2, dans laquelle le trou (73) est prévu sur un cercle (L) dont le rayon (R) est une ligne droite reliant un centre d'axe (C1) de l'axe (24) et le centre d'amortisseur (C2) de l'élément amortisseur (70).

4. Structure d'amortisseur de roue selon l'une quelconque des revendications 1 à 3, dans laquelle l'élément amortisseur (70) est formé de telle manière qu'un matériau constituant un côté à sens de rotation normal du trou (73) est d'une dureté supérieure à celle d'un matériau constituant un côté à sens de rotation inverse du trou (73).

5. Structure d'amortisseur de roue selon la revendication 4, dans laquelle l'élément amortisseur (70) est formé en moulant intégralement des caoutchoucs de dureté différente.

6. Structure d'amortisseur de roue selon l'une des revendications 1 à 4, dans laquelle le trou (73) est un trou traversant de section circulaire et parallèle à l'axe (24).
